# EUROPEAN PATENT APPLICATION

(11) **EP 4 418 438 A1**
(43) Date of publication of application: **21.08.2024**
(21) Application number: 23156820.5
(22) Date of filing: 15.02.2023
(51) Int. Cl.: H01M 50/507, H01M 10/48, H01M 50/514, H01M 50/569, H01M 10/42, H01M 50/298, H01R 4/00

(54) **METHOD FOR MANUFACTURING A CELL CONTACT SYSTEM**

(71) Applicant: Röchling Automotive SE, 68165 Mannheim (DE)
(72) Inventor: Civetta, Fabrizio, Montagna (BZ) (IT)
(74) Representative: Ullrich & Naumann PartG mbB

(57) **Abstract**

A method of manufacturing a cell contact system (114) comprising a sensor circuitry (118) is disclosed. The method comprises the following steps:
a) providing a base plate (122) having at least one busbar (124) and at least one controller interface (128) arranged thereon;
b) providing at least one sensor (126);
c) positioning the at least one sensor (126) in at least one predefined sensor position on the base plate (122);
d) positioning, by a robot comprising at least one movable welding head, at least one first electrically isolated wire (130) on the base plate (122) and welding one end of the at least one first electrically isolated wire (130) to an interface of the sensor (126) and another end of the at least one first electrically isolated wire (130) to the controller interface (128), thereby interconnecting the at least one sensor (126) and the controller interface (128);
e) repeating step d) with at least one second electrically isolated wire (130), thereby generating the sensor circuitry (118); and
f) mechanically fixating the at least two electrically isolated wires (130) relative to each other by one or more of at least one hardenable material (132) and at least one retaining element.

Further, a cell contact system (114), a battery pack (112) and a battery system (110) are disclosed.

## Description

### Technical Field

The invention relates to a method for manufacturing a cell contact system, a cell contact system, a battery pack and a battery system. The devices and methods according to the present invention may generally be applied in the field of electrical power storage, such as electrical and/or electrochemical energy storage, e.g. in electrically powered entities. Specifically, the invention may be used in the field of electro mobility, such as in fuel cell, hybrid and/or electric vehicles, e.g. in cars and/or trucks. Other applications however are feasible.

### Background art

Cell contacting systems for batteries or battery packs are generally used for interconnecting a plurality of battery cells. The cell contacting systems typically, besides interconnecting battery cells, also provide means for monitoring the batteries, e.g. via a plurality of sensors.

DE 10 2019 000 856 A1 describes a method for creating at least one low-voltage path of a cell-contacting system, said cell-contacting system having a main part. According to the method, a guide head having an dispensing opening for dispensing an electrical conductor is provided, said guide head being guided by automatic means in a predefinable trajectory relative to the main part, and the conductor being dispensed from the guide head and being laid on the main part to form the low-voltage path.

DE 10 2012 205 020 A1 describes electrochemical cells and a power line system including cell connectors for electric conductively connecting the cells that differ from cell terminals. A signal line system is provided with signal lines for electric conductively connecting a signal source with a signal line terminal of the system. A bond conductor of the signal line system is electric conductively connected with a temperature sensor of the system by a bond connector. The bond conductor is connected with the cell connector by the bond connector. An independent claim is also included for a method for manufacturing a cell contact system for an electrochemical device.

WO 2022152743 A2 describes an electric battery, having: - a cell stack consisting of a plurality of battery cells arranged next to one another in a stacking direction, wherein the battery cells have cell terminals which protrude from an outer surface of the cell stack, which surface extends in the stacking direction and orthogonally thereto; and - a plurality of cell connectors for electrically interconnecting cell terminals of battery cells which are mutually adjacent in the cell stack. If there is an arrangement of a plurality of temperature sensors in the battery, according to the invention the battery also has: - a first printed circuit board which extends on the outer surface of the cell stack and parallel to said outer surface and has a conductor track arrangement comprising conductor tracks that lead to respective pads of the first printed circuit board; - at least one second printed circuit board which is fastened to one of the cell connectors, is equipped with a temperature sensor, and has a conductor track arrangement having conductor tracks leading from the temperature sensor to pads of the second printed circuit board; and - an electric wire lead connection between the pads of the second printed circuit board and the associated pads of the first printed circuit board. The invention also proposes a method for producing such a battery.

DE 10 2021 103 388 A1 describes a battery cell contacting device for a battery module comprising a plurality of battery cells which are electrically coupled to one another via a plurality of cell connectors, said contacting device comprising a rigid circuit board which is located above the battery cells in the region adjacent to the plurality of cell connectors and is connected to the plurality of cell connectors via a plurality of contact elements. For ease and reliability of assembly, the plurality of contact elements are each formed from an electrically conductive wire, wherein the wire is electrically conductively connected to the circuit board at the first end portion of the contact element and can be electrically conductively connected to the associated cell connector at the opposite second end portion of the contact element and/or is coupled to a sensor element that can be contacted to the associated cell connector.

DE 10 2020 005 235 A1 describes an electronic component for a cell-contacting system with cell connectors that is used for the power contacting of battery cells of a battery and contains a circuit board of a measurement and/or management assembly for the battery, having plug receptacles for connection to the cell connectors, a support frame with receptacle for the circuit board, electrical connection elements for connection of the circuit board and the cell connectors to plug contacts, embedded in the support frame, for the plug receptacles, the circuit board being insertable into the receptacle by plugging the plug receptacles with the plug contacts, and having a communication interface. A cell-contacting system with cell connectors contains at least one electronic component. When producing a cell-contacting system, the electrical connection elements are firstly connected to the cell connectors and the circuit board is then inserted into the receptacle. When producing a battery module, the electrical connection elements are firstly connected to the cell connectors, then the cell-contacting system is connected to the battery, and then the circuit board is inserted into the receptacle.

Despite the advantages involved in known cell contact systems, several technical challenges remain, specifically in view of manufacturing processes. Thus, usually, the production costs and electrical wire resistance are quite high, while a flexibility, e.g. a feasibility of various geometries, of the cell contact systems is limited, e.g. due to the use of ribbon cables and/or flat flex cables.

### Problem to be solved

It is therefore desirable to provide methods and systems, which address the above-mentioned shortcomings of known methods and systems. Specifically, a method of manufacturing a cell contact system, as well as a corresponding cell contact system, a battery pack and a battery system shall be proposed, which allow for a higher geometrical flexibility, while lowering production costs and electrical resistances.

### Summary

This problem is addressed by a method of manufacturing a cell contact system, a cell contact system, a battery pack and a battery systems with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the present invention, a method of manufacturing a cell contact system is proposed. The method comprises the following steps, which may be performed in the given order. Still, a different order is possible. The method may comprise additional steps which are not mentioned. It is further possible to perform one or more or all of the method steps repeatedly. Further, two or more of the method steps may be performed simultaneously or in a timely overlapping fashion.

The method comprises the following steps:
a) providing a base plate having at least one busbar and at least one controller interface arranged thereon;
b) providing at least one sensor;
c) positioning the at least one sensor in at least one predefined sensor position on the base plate, specifically relative to the busbar and/or the controller interface;
d) positioning, by a robot comprising at least one movable welding head, at least one first electrically isolated wire on the base plate and welding one end of the at least one first electrically isolated wire to an interface of the sensor and another end of the at least one first electrically isolated wire to the controller interface, thereby interconnecting the at least one sensor and the controller interface;
e) repeating step d) with at least one second electrically isolated wire, thereby generating the sensor circuitry; and
f) mechanically fixating the at least two electrically isolated wires relative to each other by one or more of at least one hardenable material, such as at least one of a plastic material, a resin and a glue; at least one retaining element, such as at least one of a clip and other mechanical assembling retainer, such as a laminated foil.

The term "cell contact system" as used herein is a broad term and is to be given its ordinary and customary meaning to a person of ordinary skill in the art and is not to be limited to a special or customized meaning. The term specifically may refer, without limitation, to an arbitrary system configured for contacting individual battery cells. In particular, the cell contact system may be or may comprise a system configured for the electrification of a powertrain of an entity to be electrically powered, e.g. of an electric vehicle. In particular, the cell contact system comprises the sensor circuitry.

The term "base plate" as used herein is a broad term and is to be given its ordinary and customary meaning to a person of ordinary skill in the art and is not to be limited to a special or customized meaning. The term specifically may refer, without limitation, to an arbitrary substrate, e.g. having a planar shape, configured for providing mechanical support. In particular, the base plate may be or may comprise an electrically non-conductive material, such as at least one sheet of electrically non-conductive material. In the base plate, the electrically non-conductive material may comprise at least one plastic material.

The term "busbar" as used herein is a broad term and is to be given its ordinary and customary meaning to a person of ordinary skill in the art and is not to be limited to a special or customized meaning. The term specifically may refer, without limitation, to an electrical conductor configured for power distribution. The busbar may particularly be or may comprise at least one metal material, such as copper, brass, aluminum, and/or one or more of their alloys. The busbar may specifically be strip and/or bar shaped. Thus, the busbar may for example have a flat strip shape or a rod shape or may even be or may comprise a hollow tube. However, in principle, any arbitrary form may be possible.

The term "sensor" as used herein is a broad term and is to be given its ordinary and customary meaning to a person of ordinary skill in the art and is not to be limited to a special or customized meaning. The term specifically may refer, without limitation, to an arbitrary element configured for one or more of detecting, measuring or monitoring at least one measurement variable or measurement property. Specifically, the sensor may be capable of generating at least one sensor signal, such as a measurement signal, e.g. an electrical signal, which is a qualitative or quantitative indicator of the measurement variable and/or measurement property.

As an example, the at least one sensor may be selected from the group consisting of: a temperature sensor; a voltage sensor; a strain gauge.

Further, step b) may for example comprise providing at least two sensors. Specifically, step b) may comprise providing more than two sensors.

The term "sensor circuitry" as used herein is a broad term and is to be given its ordinary and customary meaning to a person of ordinary skill in the art and is not to be limited to a special or customized meaning. The term specifically may refer, without limitation, to an arbitrary electrical wiring and/or interconnection of at least one sensor with at least one entity able to read the sensor signals. As an example, the sensor circuitry may be configured for transmitting the sensor signals, e.g. the measurement signals, via the controller interface to a controller. In particular, as will be outlined further below, the sensor circuitry may be configured for transmitting monitoring information one or more of the batteries that are connectable by the cell contact system, specifically to a monitoring controller, e.g. via the controller interface. Specifically, the sensor circuitry may be a low-voltage wiring connection, e.g. configured for transmitting electronic signals within a low voltage range. As an example, the sensor circuitry may be configured for transmitting electronic signals within a voltage range of from 1 V to 24 V, specifically within a voltage range of from 10 V to 14 V, more specifically with a voltage of 12 V ± 1 V.

The term "interface" as used herein is a broad term and is to be given its ordinary and customary meaning to a person of ordinary skill in the art and is not to be limited to a special or customized meaning. The term specifically may refer, without limitation, to an element or device which is configured for interacting with its environment, such as for the purpose of unidirectionally or bidirectionally exchanging information, such as for exchange of one or more of data or commands. Thus, for example, the "controller interface" may be configured to share information with a controller, specifically with a monitoring controller, and to receive information by the controller, specifically by the monitoring controller. In particular, the controller interface may be configured for being connected, e.g. interconnected, to the at least one sensor via the sensor circuitry, wherein the sensor signals, e.g. for monitoring purposes, may for example be transferrable via the controller interface to a monitoring controller.

The term "robot" as used herein is a broad term and is to be given its ordinary and customary meaning to a person of ordinary skill in the art and is not to be limited to a special or customized meaning. The term specifically may refer, without limitation, to an arbitrary electrical machine configured for performing movements and/or processes by using at least one physical actuator and preferably, at least one data processing device and, more preferably, by using at least one processor and/or at least one application-specific integrated circuit. Thus, as an example, the robot comprises at least one physical actuator for performing a positioning operation and/or process. Particularly for this purpose, the robot may comprise at least one data processing device having a software code stored thereon comprising a number of computational commands enabling the robot to perform the positioning operation and/or process of step d). Further, as an example, the robot comprises at least one welding head configured for performing a welding operation and/or process. Specifically for this purpose, the robot may comprise at least one data processing device having a software code stored thereon comprising a number of computer commands enabling the robot to perform the welding of step d). The robot may provide one or more hardware elements for performing one or more of the named operations and/or may provide one or more processors with software running thereon for performing one or more of the named operations, i.e. by driving one or more of the at least one physical actuator and the welding head. The robot may further comprise one or more programmable devices such as one or more computers, application-specific integrated circuits (ASICs), Digital Signal Processors (DSPs), or Field Programmable Gate Arrays (FPGAs) which are configured to perform at least steps d) and e).

In particular, step d) comprises, e.g. before performing the welding, the positioning of the at least one first electrically isolated wire, such as a laying of the wire, on the base plate, specifically such that the one end is weldable to the sensor interface and the other end is weldable to the controller interface. Thus, the positioning may specifically comprise a laying and/or placing of the at least one first electrically isolated wire on the base plate.

The term "electrically isolated wire" as used herein is a broad term and is to be given its ordinary and customary meaning to a person of ordinary skill in the art and is not to be limited to a special or customized meaning. The term specifically may refer, without limitation, to an arbitrary refers to a wire and/or electrical conductor that is at least partially sheathed by an electrically insulating material. In particular, the electrically isolated wire may herein simply be referred to as "wire". As an example, the wire, i.e. the electrically isolated wire, may be an enameled wire.

The term "welding" as used herein is a broad term and is to be given its ordinary and customary meaning to a person of ordinary skill in the art and is not to be limited to a special or customized meaning. The term specifically may refer, without limitation, to a process of material bonding of at least two objects, e.g. having equal or different materials. In particular, different energy sources may be used for the welding. Thus, as an example, the energy sources used for the welding may be selected from the group consisting of one or more of: an electric arc, a laser, an electron beam, friction and ultrasound.

The term "mechanically fixating" as used herein is a broad term and is to be given its ordinary and customary meaning to a person of ordinary skill in the art and is not to be limited to a special or customized meaning. The term specifically may refer, without limitation, to the process of connecting at least two elements and/or objects such that physical force, e.g. resulting in movement, may be transmittable from one of the elements and/or objects to the other. Thus, the term "mechanically fixating the at least two electrically isolated wires relative to each other" as used herein may refer to a process of physically connecting the at least two wires such that they are no longer movable independently from each other in a nondestructive manner. For the purpose of mechanically fixating, one or more of at least one hardenable material and at least one retaining element are used.

The term "hardenable material" as used herein is a broad term and is to be given its ordinary and customary meaning to a person of ordinary skill in the art and is not to be limited to a special or customized meaning. The term specifically may refer, without limitation, to an arbitrary curable material, i.e. a material capable of performing a curing reaction, such as a transformation from a liquid state to a physically stable, e.g. cured, state. In particular, such a curing reaction may basically be a polymerization or crosslinking reaction in which monomers are converted into polymers. For example, the hardenable material may be configured for, when undergoing curing reaction, converting from a mixture of monomers, in particular a liquid mixture of monomers, into covalently crosslinked polymers, in particular a network of thermoset macromolecules or a solid mixture of thermoplastic long-chain macromolecules. For example, the curing reaction may be an exothermic reaction.

In step f), the hardenable material may specifically be applied to the electrically isolated wires in a molding process, specifically in an overmolding process. Thus, for example, step f) may comprise one or more molding processes, specifically at least one overmolding processes. In particular, the molding process may comprise overcasting the electrically isolated wires within the hardenable material. Specifically, the molding process may comprise completely encapsulating the wires within the hardenable material, e.g. before curing the hardenable material.

Additionally or alternatively, in step f), the retaining element may be used for mechanically fixating the electrically isolated wires by performing one or more of:
- positioning, specifically in step d), the electrically isolated wires within the at least one retaining element, i.e. within the clip; and
- applying the at least one retaining element to the electrically isolated wires and mechanically connecting, specifically not electrically connecting, in each case at least two of the electrically isolated wires via the at least one retaining element.

The base plate may specifically be selected from the group consisting of: a frame element for mechanically stabilizing the cell contact system; and a holder fixture for providing temporary mechanical support, e.g. intermediate mechanical support, to the sensor circuitry, and specifically the busbar and the controller interface. Thus, as an example, the base plate may be one or more of the frame element and the holder fixture.

In particular, in case the base plate is or comprises the frame element, in steps c) and d), the at least one sensor and the electrically isolated wires may be positioned directly on the frame element.

Alternatively however, in case the base plate is the holder fixture, the method may further comprise the following steps:
g) providing a frame element, specifically the frame element differing from the base plate, for mechanically stabilizing the cell contact system;
h) transferring, e.g. by the robot, the sensor circuitry, the at least one sensor, the busbar and the controller interface from the holder fixture onto the frame element.

Thus, in case the base plate is or comprises the holder fixture, a separate frame element may be provided and used for having the sensor circuitry, the sensor, the busbar and the controller interface transferred onto it.

In particular, the transferring in step h) may comprise one or more of:
- arranging the fixture on the frame element provided in step g);
- sliding, by tilting the holder fixture, the sensor circuitry, the at least one sensor, the busbar and the controller interface from the holder fixture onto the frame element provided in step g); and
- flipping the holder fixture and positioning, in an upside down position, the at least one sensor, the busbar and the controller interface onto the frame element provided in step g).

The method may further comprise the following step:
i) mechanically fixating the at least one sensor, the busbar and the controller interface on the frame element by one or more of at least one hardenable material, such as a plastic material, e.g. a resin and/or a glue; and at least one retaining element, such as a clip and/or other mechanical assembling retainer, such as a laminated foil.

The controller interface may further comprise a battery pack interface. Thus, as an example, the controller interface may, e.g. as an additional element or within one element, further comprise the battery pack interface, such as an interface configured for sharing information on the battery pack with the controller, specifically with the monitoring controller, and to receive information by the controller, specifically by the monitoring controller.

In a further aspect of the present invention, a cell contact system is disclosed. The cell contact system is manufactured by performing the manufacturing method as disclosed herein. Thus, for possible definitions and options, reference may be made to the description of the manufacturing method as disclosed herein.

Specifically, the cell contact system may be or may comprise multiple entities of multiple purposes. As an example, the cell contact system as described herein may comprise the base plate, the busbar, the at least one sensor, the controller interface and the sensor circuitry comprising a plurality of wires, wherein at least two of the wires are mechanically fixated relative to each other by the at least one hardenable material and/or the at least one retaining element.

In a further aspect of the present invention, a battery pack is disclosed. The battery pack comprises at least two batteries and a cell contact system as disclosed herein, contacting the at least two batteries, wherein at least one item of information on the battery pack is transmittable to a monitoring controller by the sensor circuitry of the cell contact system.

For possible definitions and options of the battery pack, reference may be made to the description of the manufacturing method as disclosed herein and/or to the cell contact system as also disclosed herein.

The term "battery pack" as used herein is a broad term and is to be given its ordinary and customary meaning to a person of ordinary skill in the art and is not to be limited to a special or customized meaning. The term specifically may refer, without limitation, to a set of any number of, preferably identical, batteries or individual battery cells. In particular, the battery pack, i.e. the at least two batteries of the battery pack, are contacted by the cell contac system. Thus, preferably, in the battery pack, the batteries are connected to each other, i.e. by busbars of the cell contact system, such as in series or parallel or a mixture thereof to form an energy storage package having predefined properties, such as a predefined voltage, capacity or power density.

The battery pack may specifically comprise a pack of batteries, i.e. the at least two batteries. In particular, the at least two batteries of the battery pack may be selected from the group consisting of one or more of: cylindrical cell batteries; pouch batteries; prismatic cell batteries; blade cell batteries.

The term "item of battery information" as used herein is a broad term and is to be given its ordinary and customary meaning to a person of ordinary skill in the art and is not to be limited to a special or customized meaning. The term specifically may refer, without limitation, to an arbitrary item of information, e.g. one or more numerical values, which quantify at least one property, quality, feature or characteristic of an object, e.g. of at least one battery within the battery pack.

As an example, the item of battery information may be one or more of: an item of voltage information; an item of temperature information; an item of strain information; an item of current information; an item of charge information.

In a further aspect of the present invention, a battery system is disclosed. The battery system comprises a battery pack as disclosed herein and at least one monitoring controller configured for monitoring at least one item of information on the battery pack. In the battery system, the item of information on the battery pack is transmitted to the monitoring controller by the sensor circuitry of the cell contact system of the battery pack, e.g. via the controller interface of the cell contact system.

For possible definitions and options of the battery system, reference may be made to the description of the manufacturing method as disclosed herein and/or to the cell contact system as also disclosed herein and/or to the battery pack as disclosed herein.

The term "monitoring controller", or short "controller", as used herein is a broad term and is to be given its ordinary and customary meaning to a person of ordinary skill in the art and is not to be limited to a special or customized meaning. The term specifically may refer, without limitation, to an arbitrary device configured for performing at least one monitoring operation of the batteries of the battery pack, i.e. of the at least one item of battery information of the battery pack, preferably by using at least one data processing device and, more preferably, by using at least one processor and/or at least one application-specific integrated circuit.

As further used herein, the term "monitoring" refers to a process of continuously acquiring data and deriving desired information therefrom without user interaction. For this purpose, a plurality of measurement signals are generated, e.g. by the sensor circuitry, and evaluated by the monitoring controller, wherefrom a desired information on the battery pack, e.g. a monitoring information, is determined. Herein, the plurality of measurement signals may be recorded within fixed or variable time intervals or, alternatively or in addition, at an occurrence of at least one pre-specified event. In particular, the sensors as used herein may, especially, be configured for a continuous monitoring of one or more of the items of battery information on the battery pack, such as for managing, monitoring, and controlling a functioning of the battery pack.

The proposed methods and devices provide a large number of advantages over known methods and devices of similar kind. In particular, the methods and devices according to the present application may allow for a higher flexibility, e.g. a more flexible process, specifically in the buildup of the cell contact system, i.e. in the positioning and/or arrangement of the wires of the sensor circuitry of the cell contact system, than known methods and devices. Specifically, the robot, e.g. used for positioning the wires, may in the manufacturing method be used for different sensor circuitry layouts, such as for different designs of the sensor circuitry.

Further, the methods and devices according to the present application may be more resource conserving than known methods and devices. In particular, the proposed methods and devices may use less expensive parts and/or components, e.g. readily available wires and material, and may thus be less costly and show reduced manufacturing costs compared to known methods and devices. Furthermore, specifically due to the sensor circuit being integrated into the cell contact system, and further since the sensor circuit comprises wires, e.g. the sensor circuit may be made directly by conductive wires, the proposed method and devices may allow for less individual parts, e.g. in the battery pack and the battery system. This may further help reduce manufacturing costs and complexity of the assembly.

Furthermore, the present invention, specifically the proposed methods and devices, may allow for a more precise monitoring of battery related information, e.g. during battery lifecycle or battery usage. In particular, the methods and devices according to the present application may allow for a more precise measurement, e.g. of sensor data, such as of the variable measured and/or detected by the sensors, in particular due to a lower resistance, such as a lower wire resistance, compared to known methods and devices.

Summarizing and without excluding further possible embodiments, the following embodiments may be envisaged:
Embodiment 1: A method of manufacturing a cell contact system comprising a sensor circuitry, the method comprising
   a) providing a base plate having at least one busbar and at least one controller interface arranged thereon;
   b) providing at least one sensor;
   c) positioning the at least one sensor in at least one predefined sensor position on the base plate, specifically relative to the busbar and/or the controller interface;
   d) positioning, by a robot comprising at least one movable welding head, at least one first electrically isolated wire on the base plate and welding one end of the at least one first electrically isolated wire to an interface of the sensor and another end of the at least one first electrically isolated wire to the controller interface, thereby interconnecting the at least one sensor and the controller interface;
   e) repeating step d) with at least one second electrically isolated wire, thereby generating the sensor circuitry; and
   f) mechanically fixating the at least two electrically isolated wires relative to each other by one or more of at least one hardenable material, such as at least one of a plastic material, a resin and a glue; at least one retaining element, such as at least one of a clip and other mechanical assembling retainer, such as a laminated foil.
Embodiment 2: The method according to the preceding embodiment, wherein in step f) the hardenable material is applied to the electrically isolated wires in a molding process, specifically in an overmolding process.
Embodiment 3: The method according to the preceding embodiment, wherein the molding process comprises overcasting the electrically isolated wires within the hardenable material, specifically completely encapsulating the wires within the hardenable material.
Embodiment 4: The method according to any one of the preceding embodiments, wherein in step f) the retaining element is used for mechanically fixating the electrically isolated wires by performing one or more of:
   - positioning, specifically in step d), the electrically isolated wires within the at least one retaining element, i.e. within the clip; and
   - applying the at least one retaining element to the electrically isolated wires and mechanically connecting, specifically not electrically connecting, in each case at least two of the electrically isolated wires via the at least one retaining element.
Embodiment 5: The method according to any one of the preceding embodiments, wherein the base plate is selected from the group consisting of: a frame element for mechanically stabilizing the cell contact system; a holder fixture for providing temporary mechanical support, e.g. intermediate mechanical support, to the sensor circuitry, and specifically the busbar and the controller interface.
Embodiment 6: The method according to the preceding embodiment, wherein in case the base plate is the holder fixture, the method further comprises:
   g) providing the frame element, specifically the frame element differing from the base plate, for mechanically stabilizing the cell contact system;
   h) transferring, e.g. by the robot, the sensor circuitry, the at least one sensor, the busbar and the controller interface from the holder fixture onto the frame element.
Embodiment 7: The method according to the preceding embodiment, wherein the transferring in step h) comprises one or more of: arranging the fixture on the frame element provided in step g); sliding, by tilting the holder fixture, the sensor circuitry, the at least one sensor, the busbar and the controller interface from the holder fixture onto the frame element provided in step g); flipping the holder fixture and positioning, in an upside down position, the at least one sensor, the busbar and the controller interface onto the frame element provided in step g).
Embodiment 8: The method according to any one of the three preceding embodiments, further comprising:
   i) mechanically fixating the at least one sensor, the busbar and the controller interface on the frame element by one or more of at least one hardenable material, such as a plastic material, e.g. a resin and/or a glue; and at least one retaining element, such as a clip and/or other mechanical assembling retainer, such as a laminated foil.
Embodiment 9: The method according to any one of the preceding embodiments, wherein the sensor is selected from the group consisting of: a temperature sensor; a voltage sensor; a strain gauge.
Embodiment 10: The method according to any one of the preceding embodiments, wherein step b) comprises providing at least two sensors, specifically more than two sensors.
Embodiment 11: The method according to any one of the preceding embodiments, wherein the controller interface further comprises a battery pack interface.
Embodiment 12: A cell contact system manufactured by performing the manufacturing method according to any one of the preceding embodiments.
Embodiment 13: A battery pack comprising at least two batteries and a cell contact system according to the preceding embodiment contacting the at least two batteries, wherein at least one item of information on the battery pack is transmittable to a monitoring controller by the sensor circuitry of the cell contact system.
Embodiment 14: The battery pack according to the preceding embodiment, wherein the at least two batteries are selected from the group consisting of one or more of: cylindrical cell batteries; pouch batteries; prismatic cell batteries; blade cell batteries.
Embodiment 15: The battery pack according to any one of the two preceding embodiments, wherein the item of battery information is one or more of: an item of voltage information; an item of temperature information; an item of strain information; an item of current information; an item of charge information.
Embodiment 16: A battery system comprising a battery pack according to any one of the preceding embodiments referring to a battery pack and at least one monitoring controller configured for monitoring at least one item of information on the battery pack, wherein the item of information on the battery pack is transmitted to the monitoring controller by the sensor circuitry of the cell contact system of the battery pack, e.g. via the controller interface of the cell contact system.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows an embodiment of a battery system with an embodiment of a battery pack and an embodiment of a cell contact system in a schematic view;
- Figure 2: shows part of an embodiment of a battery pack with a part of an embodiment of a cell contact system in a perspective view;
- Figure 3: shows part of an embodiment of a battery pack with a part of an embodiment of a cell contact system in a top planar view;
- Figures 4 and 5: show different flow charts of a method of manufacturing a cell contact system; and
- Figures 6 to 8B: show different parts of a flow chart of a method of manufacturing a cell contact system.

### Detailed description of the embodiments

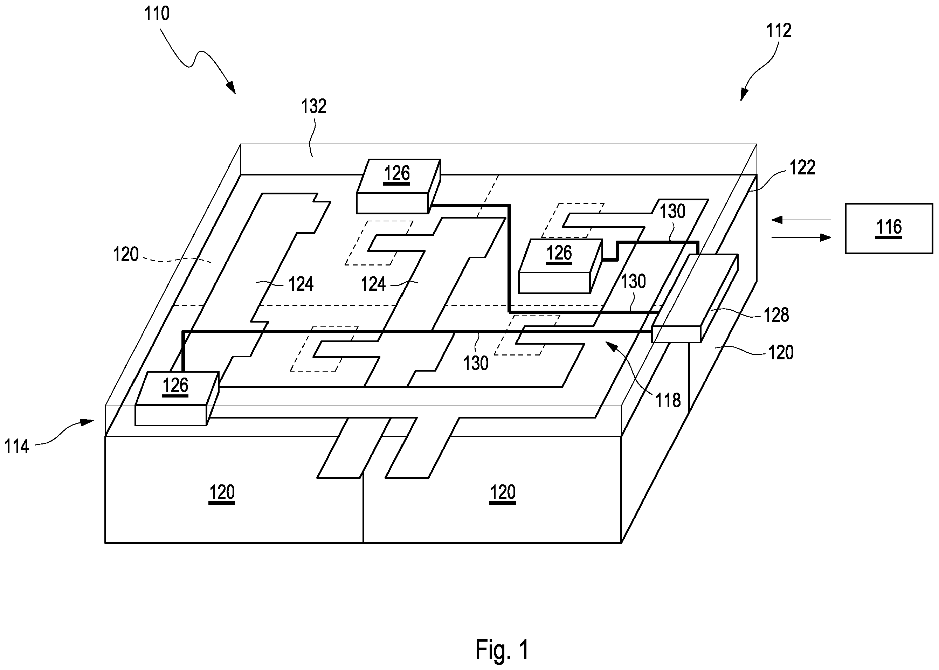

In Figure 1, an embodiment of a battery system 110 with an embodiment of a battery pack 112 and an embodiment of a cell contact system 114 is illustrated in a schematic view. The battery system 110 comprises the battery pack 112 and at least one monitoring controller 116. The monitoring controller 116 is configured for monitoring at least one item of information on the battery pack 112, wherein the item of information on the battery pack is transmitted to the monitoring controller 116 by a sensor circuitry 118 of the cell contact system 114 of the battery pack 112.

The battery pack 112 comprises at least two batteries 120 and the cell contact system 114, wherein specifically the at least one item of information on the battery pack 112 is transmittable to the monitoring controller 116 by the sensor circuitry 118 of the cell contact system 114.

The cell contact system 114 comprises the at least one sensor circuitry 118. Further, the cell contact system 114 comprises a base plate 122, a busbar 124, at least one sensor 126, a controller interface 128 and the sensor circuitry 118. In particular, the sensor circuitry 118 comprises a plurality of wires 130, wherein at least two of the wires 130 are mechanically fixated relative to each other by at least one hardenable material 132 and/or by at least one retaining element (not shown in the Figures).

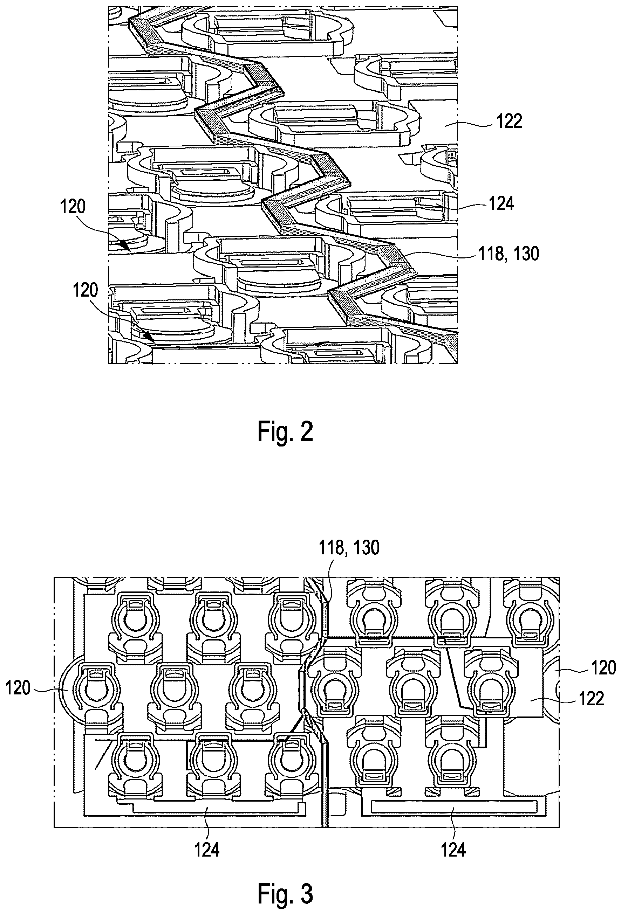

Figures 2 and 3 show parts of an embodiment of a battery pack 112 with parts of an embodiment of a cell contact system 114 in a perspective view (Figure 2) and in a top planar view (Figure 3). In particular, the sensor circuitry 118, e.g. comprising the plurality of wires 130, may be positioned, particularly by a robot, on the base plate 122 during manufacturing of the cell contact system 114. The cell contact system 114 is manufactured by performing the a manufacturing method 134.

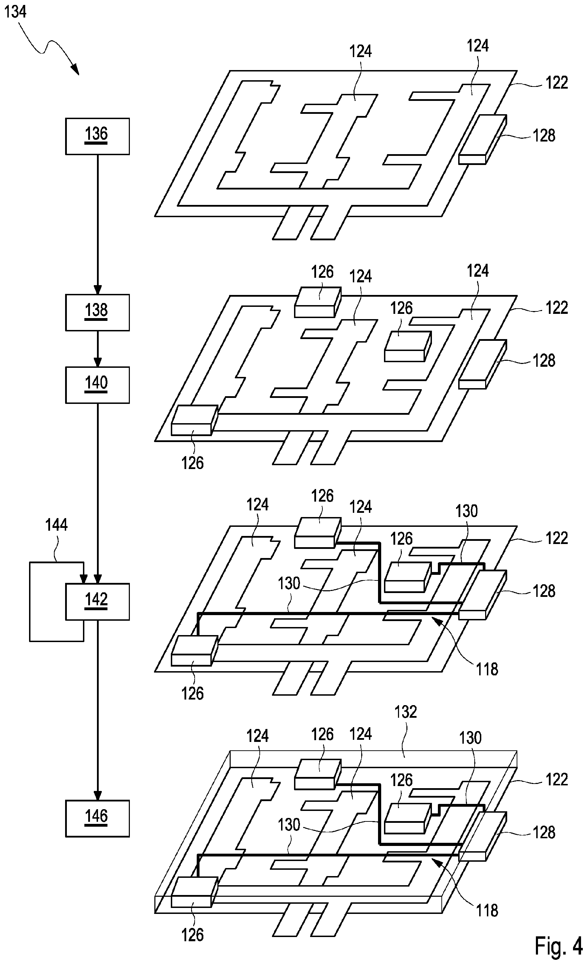

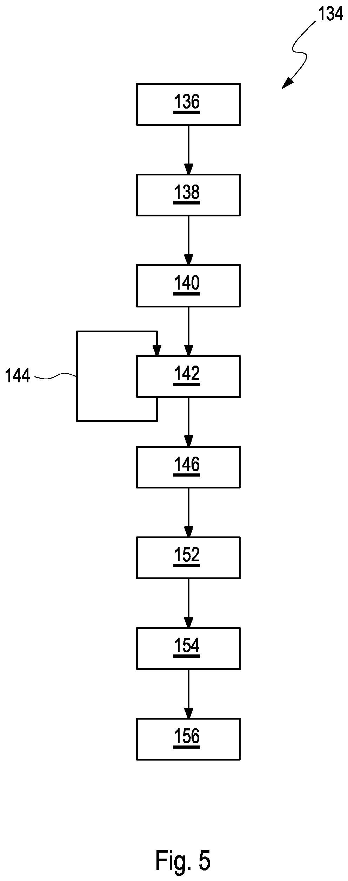

Figures 4 and 5 show different flow charts of the method of manufacturing 134 a cell contact system 112 comprising a sensor circuitry 118. The method comprises the following steps:
a) (denoted by reference number 136) providing a base plate 122 having at least one busbar 124 and at least one controller interface 128 arranged thereon;
b) (denoted by reference number 138) providing at least one sensor 126;
c) (denoted by reference number 140) positioning the at least one sensor 126 in at least one predefined sensor position on the base plate 122;
d) (denoted by reference number 142) positioning, by a robot comprising at least one movable welding head, at least one first electrically isolated wire130 on the base plate 122 and welding one end of the at least one first electrically isolated wire 130 to an interface of the sensor 126 and another end of the at least one first electrically isolated wire 130 to the controller interface 128, thereby interconnecting the at least one sensor 126 and the controller interface 128;
e) repeating step d) with at least one second electrically isolated wire 130, thereby generating the sensor circuitry 118; and
f) mechanically fixating the at least two electrically isolated wires 130 relative to each other by one or more of at least one hardenable material 132 and at least one retaining element.

As an example, the base plate 122 may be selected from the group consisting of: a frame element 148 for mechanically stabilizing the cell contact system 114 and a holder fixture 150 for providing temporary mechanical support to the sensor circuitry 118.

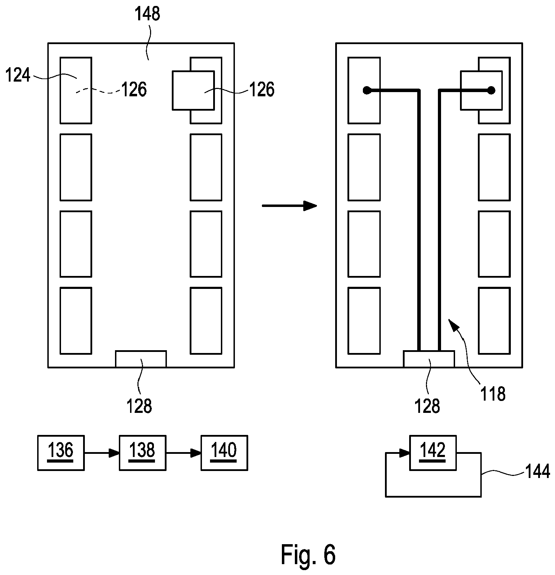

Thus, in case the base plate is or comprises the frame element 148, in steps c) and d), the at least one sensor 126 and the electrically isolated wires 130 may be positioned directly on the frame element 148. This part of the method 134 is exemplarily illustrated in Figure 6, wherein on the left, an exemplarily embodiment of the product of the method after performing steps a) to c) is illustrated and on the right, an exemplarily embodiment of the product of the method after further performing steps d) and e) is illustrated.

Alternatively however, in particular in case the base plate is the holder fixture 150, the method may further comprise the following steps:
g) (denoted by reference number 152) providing the frame element 148, specifically the frame element 148 differing from the base plate 122, for mechanically stabilizing the cell contact system 114;
h) (denoted by reference number 154) transferring, e.g. by the robot, the sensor circuitry 118, the at least one sensor 126, the busbar 124 and the controller interface 128 from the holder fixture 150 onto the frame element 148.

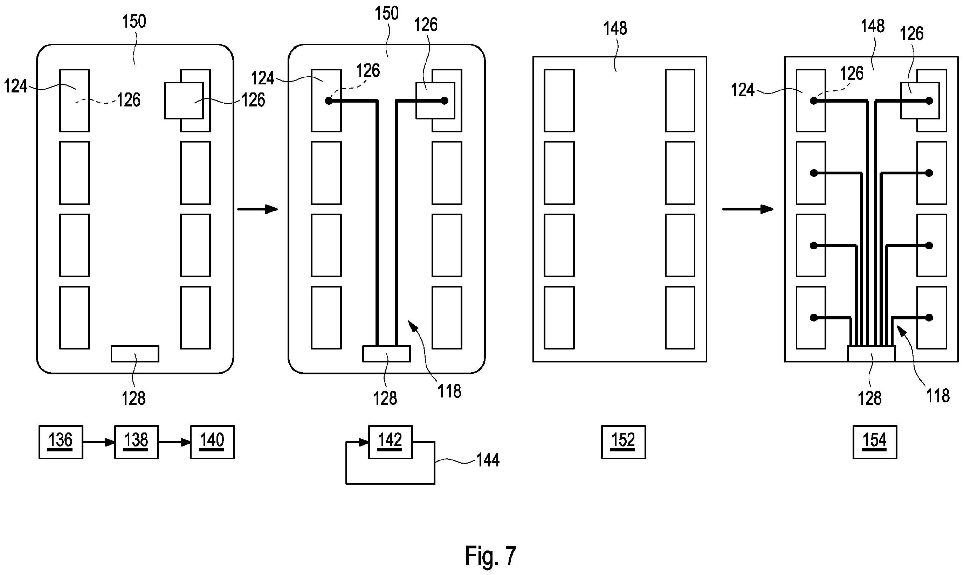

Thus, in case the base plate 122 is or comprises the holder fixture 150, a separate frame element 148 may be provided and used for having the sensor circuitry 118, the at least one sensor 126, the busbar 124 and the controller interface 128 transferred onto it. This part of the method 134 may exemplarily be illustrated in Figure 7. In particular, in Figure 7, from left to right, an exemplary embodiment of a product of the method 134 after performing steps a) to c) is illustrated, an exemplarily embodiment of a product of the method 134 after further performing steps d) and e) is illustrated, an exemplarily embodiment of a product of the method 134 after further performing step g) is illustrated and an exemplarily embodiment of a product of the method 134 after further performing step h) is illustrated.

The holder fixture 150 particularly may be configured for providing temporary mechanical support to the sensor circuitry 118, the busbar 124 and to the controller interface 128. The holder fixture 150 may specifically be configured for providing intermediate mechanical support, such as for a short period of time, i.e. as long as required within the manufacturing process of the cell contact system, e.g. for an intermediate time between steps a) to h) of the manufacturing method 134.

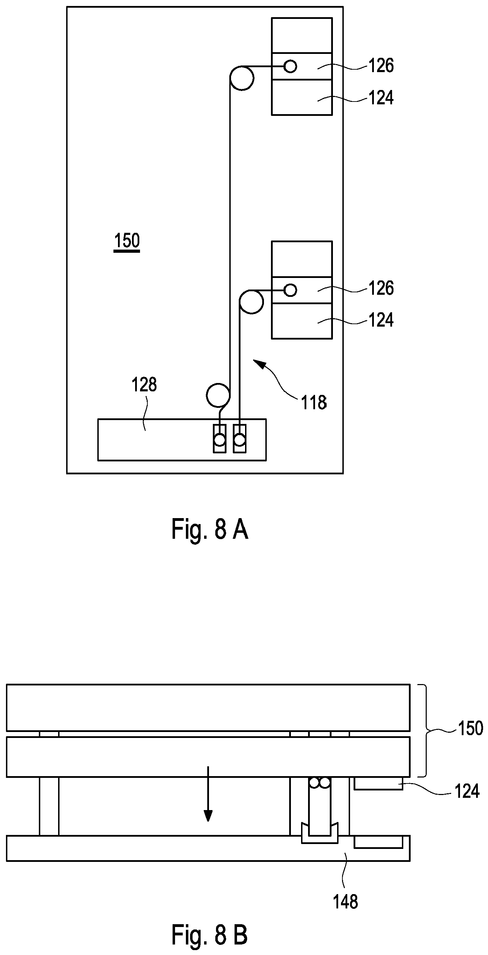

As an example, the transferring in step h) may comprise flipping the holder fixture 150 and positioning, in an upside down position, the at least one sensor 126, the busbar 124 and the controller interface 128 onto the frame element 150 provided in step g). This part of the method 134 may exemplarily be illustrated in Figures 8A and 8B.

Further, the method 134 may comprise the following step
i) mechanically fixating the at least one sensor 126, the busbar 124 and the controller interface 128 on the frame element 150 by one or more of at least one hardenable material 132, such as a plastic material, e.g. a resin and/or a glue; and at least one retaining element, such as a clip and/or other mechanical assembling retainer, such as a laminated foil.

### List of reference numbers

- 110: battery system
- 112: battery pack
- 114: cell contact system
- 116: monitoring controller
- 118: sensor circuitry
- 120: battery
- 122: base plate
- 124: busbar
- 126: sensor
- 128: controller interface
- 130: electrically isolated wire
- 132: hardenable material
- 134: manufacturing method
- 136: step a)
- 138: step b)
- 140: step c)
- 142: step d)
- 144: step e)
- 146: step f)
- 148: frame element
- 150: holder fixture
- 152: step g)
- 154: step h)
- 156: step i)

## Claims

1. A method of manufacturing a cell contact system (114) comprising a sensor circuitry (118), the method comprising
a) providing a base plate (122) having at least one busbar (124) and at least one controller interface (128) arranged thereon;
b) providing at least one sensor (126);
c) positioning the at least one sensor (126) in at least one predefined sensor position on the base plate (122);
d) positioning, by a robot comprising at least one movable welding head, at least one first electrically isolated wire (130) on the base plate (122) and welding one end of the at least one first electrically isolated wire (130) to an interface of the sensor (126) and another end of the at least one first electrically isolated wire (130) to the controller interface (128), thereby interconnecting the at least one sensor (126) and the controller interface (128);
e) repeating step d) with at least one second electrically isolated wire (130), thereby generating the sensor circuitry (118); and
f) mechanically fixating the at least two electrically isolated wires (130) relative to each other by one or more of at least one hardenable material (132) and at least one retaining element.

2. The method according to the preceding claim, wherein in step f) the hardenable material (132) is applied to the electrically isolated wires (130) in a molding process.

3. The method according to the preceding claim, wherein the molding process comprises overcasting the electrically isolated wires (130) within the hardenable material (132).

4. The method according to any one of the preceding claims, wherein in step f) the retaining element is used for mechanically fixating the electrically isolated wires (130) by performing one or more of:
- positioning, specifically in step d), the electrically isolated wires (130) within the at least one retaining element; and
- applying the at least one retaining element to the electrically isolated wires (130) and mechanically connecting in each case at least two of the electrically isolated wires (130) via the at least one retaining element.

5. The method according to any one of the preceding claims, wherein the base plate (122) is selected from the group consisting of: a frame element (148) for mechanically stabilizing the cell contact system and a holder fixture (150) for providing temporary mechanical support.

6. The method according to the preceding claim, wherein in case the base plate (122) is the holder fixture (150), the method further comprises:
g) providing a frame element (148) for mechanically stabilizing the cell contact system (112);
h) transferring the sensor circuitry (118), the at least one sensor (126), the busbar (124) and the controller interface (128) from the holder fixture (150) onto the frame element (148).

7. The method according to the preceding claim, wherein the transferring in step h) comprises one or more of: arranging the fixture (150) on the frame element (150) provided in step g); sliding, by tilting the holder fixture, the sensor circuitry (118), the at least one sensor (126), the busbar (124) and the controller interface (128) from the holder fixture (150) onto the frame element (148) provided in step g); flipping the holder fixture (150) and positioning, in an upside down position, the at least one sensor (126), the busbar (124) and the controller interface (128) onto the frame element (148) provided in step g).

8. The method according to any one of the three preceding claims, further comprising:
i) mechanically fixating the at least one sensor (126), the busbar (124) and the controller interface (128) on the frame element (148) by one or more of at least one hardenable material (132) and at least one retaining element.

9. The method according to any one of the preceding claims, wherein the sensor (126) is selected from the group consisting of: a temperature sensor; a voltage sensor; a strain gauge.

10. The method according to any one of the preceding claims, wherein step b) comprises providing at least two sensors (126).

11. A cell contact system (114) manufactured by performing the manufacturing method according to any one of the preceding claims.

12. A battery pack (112) comprising at least two batteries (120) and a cell contact system (114) according to the preceding claim contacting the at least two batteries (120), wherein at least one item of information on the battery pack (112) is transmittable to a monitoring controller (116) by the sensor circuitry (118) of the cell contact system (114).

13. The battery pack (112) according to the preceding claim, wherein the at least two batteries (120) are selected from the group consisting of one or more of: cylindrical cell batteries; pouch batteries; prismatic cell batteries; blade cell batteries.

14. The battery pack (112) according to any one of the two preceding claims, wherein the item of battery information is one or more of: an item of voltage information; an item of temperature information; an item of strain information; an item of current information; an item of charge information.

15. A battery system (110) comprising a battery pack (112) according to any one of the preceding claims referring to a battery pack (112) and at least one monitoring controller (116) configured for monitoring at least one item of information on the battery pack (112), wherein the item of information on the battery pack (112) is transmitted to the monitoring controller (116) by the sensor circuitry (118) of the cell contact system (114) of the battery pack (112).
